# FASCICULE DE BREVET EUROPEEN

(11) **EP 0 494 810 B1**
(45) Date de publication et mention de la délivrance du brevet: **18.10.1995**
(21) Numéro de dépôt: 92400019.3
(22) Date de dépôt: 06.01.1992
(51) Int. Cl.: H02K 3/52, H02K 9/197

(54) **Procédé de réalisation d'un inducteur électromagnétique statique**
Verfahren zur Erstellung eines statischen, elektromagnetischen Induktors
Process for manufacturing a static electromagnetic inductor

(30) Priorité: 11.01.1991 FR 9100297
(43) Date de publication de la demande: 15.07.1992
(73) Titulaire: ROTELEC S.A., F-93176 Bagnolet (FR)
(72) Inventeur: Nove, Marie-Claude, F-75017 Paris (FR); Kouyoumdjian, Michel, F-78400 Chatou (FR)
(74) Mandataire: Bourely, Paul

(56) Documents cités:
- WO-A-89/06874
- GB-A- 773 665
- US-A- 2 655 613
- PATENT ABSTRACTS OF JAPAN vol. 6, no. 238 (E-114)(1116) 26 Novembre 1982 &JP-A-57 139 914
- SOVIET INVENTIONS ILLUSTRATED Section R, week B08, 4 avril 1979 Derwent Publications Ltd., London GB.
- PATENT ABSTRACTS OF JAPAN vol. 9, no. 10 (E-290)(1733) 17 Janvier 1985 & JP-A-59 159 677

## Description

### Procédé de réalisation d'un inducteur électromagnétique statique

La présente invention concerne de manière générale la génération d'un champ magnétique notamment d'un champ mobile glissant ou rotatif. Elle s'applique plus particulièrement, quoique non exclusivement, au cas où ce champ est destiné à brasser un métal en fusion, tel que celui qui constitue le noyau encore liquide d'un produit sidérurgique qui est en cours de coulée et qui se solidifie progressivement à partir de sa surface extérieure.

Un tel champ est engendré de manière connue par un inducteur électromagnétique qui, dans le cas où il s'agit de brasser un métal en fusion, peut être appelé "brasseur". Cet inducteur comporte les éléments suivants :
- un circuit magnétique constitué par une culasse assurant la fermeture d'un flux magnétique et comportant de larges dents qui forment une succession de pièces polaires en saillie,
- des bobines d'excitation préfabriquées constituées d'un conducteur isolé enroulé autour d'un axe de bobine, ces bobines étant respectivement montées coaxialement autour des pièces polaires du circuit magnétique.
- et des moyens d'alimentation électrique pour fournir à ces bobines des courants électriques d'excitation, notamment des courants alternatifs présentant des phases formant une succession temporelle associée à la succession des pôles de manière à engendrer un champ magnétique mobile.

Le circuit magnétique d'un brasseur est classiquement formé par un empilage de tôles magnétiques planes qui sont serrées grâce à des tirants. Ce circuit magnétique peut être fabriqué selon deux procédés de réalisation différents connus. Selon un premier de ces procédés le circuit magnétique est obtenu par l'assemblage mécanique,
. d'une culasse réalisée par un empilage de tôles magnétiques planes,
. et de pièces polaires qui sont réalisées chacune par un empilage de tôles magnétiques planes et qui sont ensuite fixées mécaniquement sur la culasse ; dans ce cas, par construction, ces pièces polaires sont démontables et sont dites rapportées.

Selon un deuxième procédé de réalisation du circuit magnétique ce dernier est réalisé par un empilage de tôles planes qui ont été découpées de manière à présenter une partie pleine et de larges dents ; dans ce cas, par construction culasse et pièces polaires sont indissociables.

Pour la réalisation d'un tel brasseur, les efforts électromagnétiques alternatifs importants auxquels sont soumis en service des conducteurs de la bobine rendent nécessaire l'utilisation de cales, de frettes et d'une résine d'imprégnation. Le document WO 89/06874 (PRESTOLITE) décrit un inducteur électromagnétique statique et son procédé de réalisation, cet inducteur comportant notamment une bobine d'excitation (winding 22) montée sur un support de bobine isolant (insulator 24) pour être ensuite enfilée et bloquée sur une pièce polaire (pole piece 20). Le document US-A-2 655 613 (WIESEMAN) décrit également une bobine d'excitation (winding 10) montée sur un support de bobine rigide (form or bobbin 12) puis imprégnée d'une résine durcissable.

Il est également connu de refroidir les bobines par circulation d'eau.

Ce refroidissement peut être interne. L'eau circule alors dans le canal interne d'un conducteur tubulaire qui constitue la bobine. Ce type de refroidissement impose l'utilisation d'eau déminéralisée et entraîne des problèmes liés à la nécessité de réaliser, à l'intérieur du volume limité qui est disponible pour l'inducteur, des raccordements hydrauliques relativement complexes et encombrants et d'employer des pompes suffisamment puissantes.

Ces problèmes hydrauliques sont simplifiés dans des inducteurs utilisant un refroidissement externe. Les bobines sont alors disposées à l'intérieur d'un boîtier dans lequel on fait circuler l'eau de refroidissement. Elles sont donc immergées dans cette eau et refroidies à partir des parois du bloc bobine qu'elles forment avec la résine qui les imprègne. Des dispositions d'étanchéité sont prises pour éviter toute pénétration de l'eau vers le cuivre des conducteurs.

Dans un tel système de refroidissement, l'utilisation d'eau déminéralisée n'est plus nécessaire, mais la durée de vie de telles bobines immergées est essentiellement liée au maintien de l'efficacité des dispositions d'étanchéité vis-à-vis de l'eau environnante - tant au niveau des conducteurs qu'à celui de l'imprégnation. C'est pourquoi de nombreuses précautions sont prises pour le choix des matériaux isolants, pour celui des procédures de fabrication et d'imprégnation, et pour celui de l'eau de refroidissement - on cherche en particulier à obtenir une faible teneur de l'eau en particules solides et spécialement en particules ferromagnétiques et à limiter la taille de ces particules. En dépit de toutes ces précautions la durée de vie de telles bobines est limitée à long terme et d'une manière globale (sur toutes les bobines) par les pouvoirs d'absorption en eau des divers matériaux actuellement utilisables. Ces pouvoirs d'absorption se traduisent par la création de micro-porosités à travers lesquelles se développent dans l'eau des courants de fuite vers les masses métalliques constituées essentiellement par le circuit magnétique de l'inducteur. L'énergie dissipée par ces courants de fuite transforme les micro-porosités en macro-porosités qui conduisent à moyen terme à des ruptures complètes de l'isolation. Le cuivre n'étant plus protégé est alors attaqué par électrolyse et le processus conduit généralement à la rupture du conducteur de bobinage.

Cette durée de vie peut d'autre part être réduite de façon très importante et localisée (sur une bobine par exemple) par des phénomènes accidentels (par exemple, introduction d'un corps étranger dans le volume contenant les bobines, mauvais fonctionnement du circuit d'eau...)

Deux problèmes se posent alors. Le premier est d'augmenter la durée de vie globale de l'inducteur. Le deuxième est de faciliter le remplacement d'une bobine défaillante.

La présente invention a notamment pour but de résoudre simplement et mieux que précédemment ces deux problèmes.

Dans ce but, elle a notamment pour objet un inducteur et son procédé de réalisation selon les Revendications 1 et 9, caractérisé par le fait que la bobine qui doit être montée sur chacune des pièces polaires de cet inducteur est préalablement fixée autour d'un support de bobine tubulaire pour former un bloc de bobine annulaire qui est ensuite enfilé et bloqué de manière réversible sur cette pièce polaire.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs.
- La figure 1 représente une vue simplifiée d'une bobine préfabriquée destinée à être incorporée dans un inducteur donné en exemple de mise en oeuvre de la présente invention.
- La figure 2 représente une vue d'un support de cette bobine.
- La figure 3 représente une vue d'un bloc bobine obtenu par assemblage de cette bobine sur un support de bobine.
- La figure 4 représente une vue d'une pièce polaire destinée à être assemblée à ce bloc bobine et de cales destinées à être interposées entre cette pièce et ce bloc.
- La figure 5 représente une vue d'un bloc polaire obtenu par montage de ce bloc bobine sur la pièce polaire de la figure 4.
- La figure 6 représente une vue partielle en coupe d'un inducteur selon cette invention après assemblage de ce bloc polaire sur la culasse d'un circuit magnétique.

Lorsqu'un même élément est représenté sur plusieurs figures il y est désigné par le même numéro de référence.

La description ci-après correspond à la réalisation d'un inducteur de champ tournant, cet inducteur ayant une forme générale cylindrique et constituant un brasseur pour l'industrie sidérurgique. Les bobines de ce brasseur sont alimentées en courant triphasé. Son circuit magnétique est constitué par une culasse magnétique et par des pièces polaires rapportées.

La mise en oeuvre de la présente invention passe par la réalisation d'une bobine et d'un support de bobine.

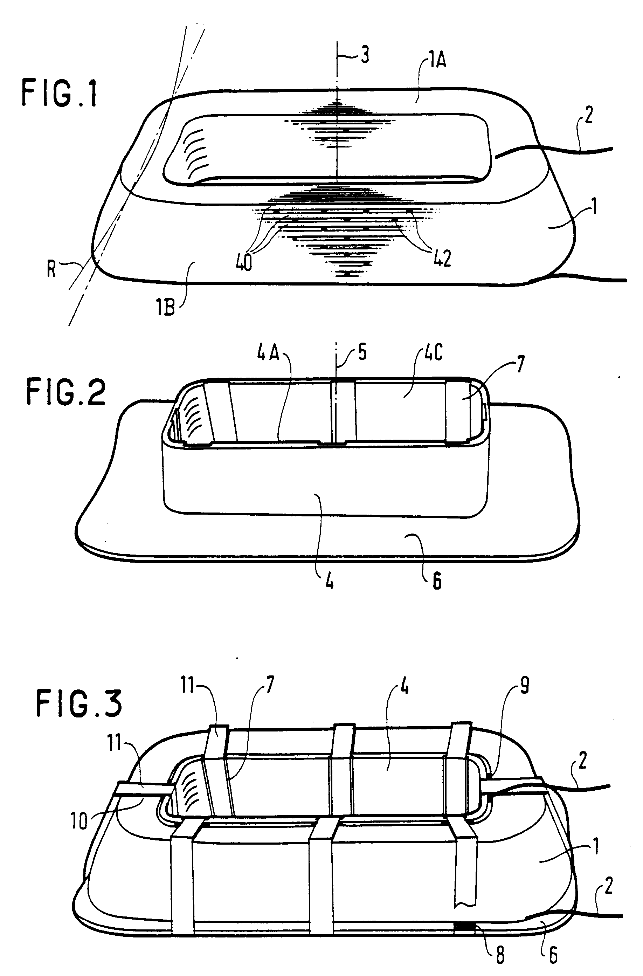

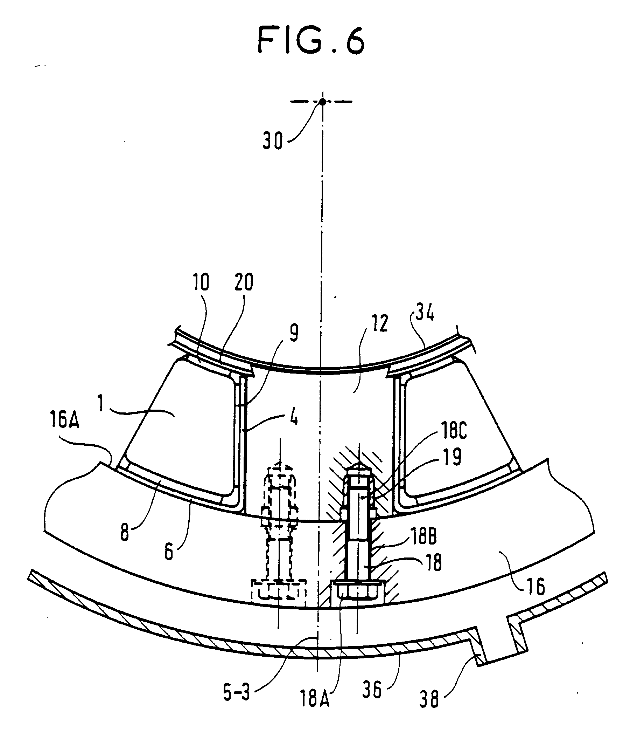

Sur la figure 1 est représentée une vue simplifiée d'une bobine préfabriquée 1. Cette bobine comporte une succession axiale de galettes. Chaque galette telle que 40 est constituée par un conducteur isolé 2 enroulé en spires successives coplanaires en appui sur un mandrin de forme non représenté autour d'un axe de galette non représenté. Elle est ensuite cintrée par courbure autour d'un axe de cintrage croisant l'axe de galette à angle droit à distance de la galette. Les galettes sont ensuites empilées coaxialement à un axe de bobine 3. Des cales telles que 42 maintiennent des intervalles non représentés entre les galettes successives pour le passage d'un liquide et, plus particulièrement d'une eau de refroidissement. La bobine finie se présente sous la forme d'un bloc annulaire cintré. Son cintrage suit un arc de cercle R qui est représenté seulement pour faciliter la compréhension. L'axe de ce cercle constitue un axe de cintrage non représenté sur la figure 1 et commun à toutes les galettes. Il est situé au dessus et à distance de ce bloc dans le plan de cette figure. Cet axe sera ultérieurement amené en coïncidence avec un axe d'inducteur 30 visible sur la figure 6. On définit une face supérieure 1A de ce bloc comme celle ayant le rayon de cintrage le plus faible et une face inférieure 1B comme celle ayant le rayon de cintrage le plus grand.

Un support de bobine est représenté par la figure 2. Ce support de bobine comporte un fût de bobine tubulaire 4, d'axe 5, à un bord de base 4A duquel se raccorde de façon rigide une embase annulaire 6 qui s'étend à partir de ce bord vers l'extérieur de ce fût selon des directions sensiblement radiales par rapport à ce fût.

Le fût de bobine tubulaire 4 et l'embase sont réalisés de préférence en un matériau isolant de caractéristiques mécaniques et d'épaisseur 6 suffisantes pour que l'ensemble se comporte d'une manière parfaitement rigide à partir de sa réalisation. Dans le cas d'un brasseur cette épaisseur est typiquement comprise entre 3 et 5 mm environ, le matériau étant composite, c'est-à-dire constitué de fibres de verre ou de carbone imprégnées par une résine thermodurcissable.

Les dimensions externes du fût tubulaire 4 correspondent aux dimensions de l'évidement axial de la bobine annulaire 1 compte tenu d'un jeu réparti sur la périphérie de ce fût.

La hauteur du fût 4 (dimension prise selon la direction de l'axe 5 du fût) est égale à la hauteur de la bobine 1 (dimension prise selon la direction de l'axe de bobine 3), majorée de l'épaisseur de l'embase annulaire et de deux jeux de montage en faces supérieure et inférieure de la bobine 1. La paroi interne du fût de bobine 4 comporte, sur toute sa hauteur, des rainures 7 régulièrement disposées sur cette périphérie.

L'extension radiale de l'embase annulaire 6 correspond à l'extension radiale de la face externe de la bobine 1 à laquelle s'ajoute deux jeux de part et d'autre.

La bobine 1 et le support de bobine ayant été réalisés, les opérations suivantes consistent à enfiler la bobine 1 autour du fût de bobine 4, à positionner la bobine de façon à ce que son axe 3 coïncide avec l'axe 5 du fût tubulaire 4, et à fixer la bobine sur son support de bobine à l'aide de cales et de frettes, afin d'obtenir un ensemble bobine solidaire et relativement compact.

Cet ensemble est représenté sur la figure 3.

Au droit de chaque rainure 7 du fût tubulaire 4, sont disposées :
- une cale 8, entre la face inférieure de la bobine 1 et la face supérieure de l'embase annulaire 6,
- une cale 9, entre l'évidement interne de la bobine 1 et la face externe du fût tubulaire 4,
- une cale 10, sur la face supérieure de la bobine 1.

Au droit de chaque ensemble de cales 8-9-10, est disposée une frette 11 qui entoure la bobine et le support de bobine.

Cet ensemble subit alors une opération d'imprégnation réalisée à l'aide d'une résine de manière à conserver l'évidement central. Il forme alors un bloc bobine 32.

Cette opération n'obture pas les intervalles entre les spires de la bobine, mais elle rigidifie les cales et les frettes et confére au bloc bobine une bonne résistance mécanique, une bonne protection vis-à-vis de l'immersion dans l'eau, ainsi qu'une bonne isolation entre spires et vis-à-vis du milieu environnant.

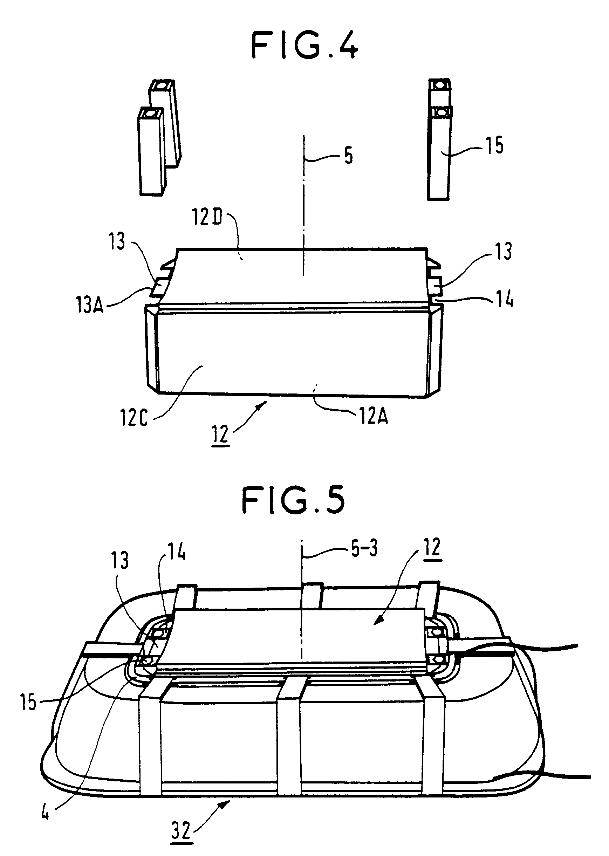

La figure 4 représente la vue d'une pièce polaire 12. Cette pièce est réalisée par un empilage de tôles magnétiques planes qui sont serrées entre deux plaques d'extrémité 13 reliées entre elles par un tirant non représenté. Les faces externes telles que 13A de chacune de ces plaques sont creusées sur toute leur hauteur de deux rainures parallélépipédiques 14. La face inférieure 12A de cette pièce polaire est munie de deux taraudages 19 quine sont pas représentés sur cette figure et qui seront utilisés pour le montage de cette pièce sur l'alésage intérieur de la culasse du circuit magnétique (figure 6).

Une surface périphérique de cette pièce polaire comporte des faces externes 13A des plaques 13 et deux autres faces 12C et 12D de cette pièce.

L'opération de montage suivante consiste à enfiler le bloc bobine tel que représenté figure 3 sur la pièce polaire telle que représentée figure 4 puis à le fixer sur cette pièce polaire afin d'obtenir un bloc polaire représenté à la figure 5.

La fixation du bloc bobine sur la pièce polaire 12 s'effectue à l'aide de cales de bloc bobine 15. Ces cales sont interposées de manière amovible entre le fût de bobine 4 et les surfaces externes des plaques d'extrémité 13 de la pièce polaire 12. Elles sont munies d'un dispositif de serrage qui permet de commander leur expansion radiale par exemple par l'enfoncement axial d'un coin à l'aide d'une vis. La vis de chaque cale étant desserrée, la cale peut librement être glissée entre le fût de bobine 4 et la surface latérale d'une plaque d'extrémité 13 de la pièce polaire 12, à l'intérieur de la rainure 14 de cette plaque d'extrémité. Lors du serrage de cette vis, l'expansion radiale de la cale permet d'assurer le blocage mécanique du bloc bobine sur la pièce polaire. Dans le cas décrit sur la figure 5, ce blocage mécanique est réalisé par quatre cales 14, deux sur chaque plaque d'extrémité 13 de pièces polaires. Un tel système est réversible, le desserrage des vis des cales permettant l'extraction aisée des cales 14 et donc le démontage du bloc bobine de la pièce polaire 12.

La dernière phase du montage concerne la mise en place du bloc polaire sur l'alésage intérieur de la culasse de circuit magnétique 16.

Cette culasse est constituée par un empilage de tôles magnétiques constituant une couronne magnétique qui entoure l'axe de l'inducteur 30 et présente vis-à-vis de cet axe une surface interne de forme cylindrique. Cette surface constitue une surface polaire 16A de cette culasse et doit recevoir les pièces polaires. L'axe d'inducteur 30 est généralement vertical, étant entendu que les mots tels que supérieur et inférieur précédemment employés l'ont été pour faciliter la description et ne correspondent pas à la disposition finale des bobines dans l'inducteur.

La figure 6 représente une vue partielle de l'inducteur après montage du bloc polaire sur la culasse 16.

L'opération de montage passe d'abord par l'orientation du bloc polaire pour l'orienter tel qu'il devra l'être ultérieurement lorsqu'il sera prêt à être assemblé sur la culasse (axe 5 de la pièce polaire perpendiculaire à l'axe 30 de la culasse).

Pour les opérations suivantes, et si on considère d'une manière relativement générale divers types d'inducteurs cylindriques auquel l'invention peut s'appliquer, deux cas peuvent se présenter :
- - Cas n° 1 :: L'extension du bloc bobine suivant une direction circonférentielle de l'inducteur, c'est-à-dire sensiblement perpendiculaire aux axes 5 et 30, est suffisamment petite pour permettre d'amener tous les blocs bobines jusqu'à leurs positions respectives d'assemblage par translation suivant les axes de pôles. Ces axes de poles sont définis par rapport à la culasse. Un tel axe est confondu avec l'axe 5 sur la figure 6.
- - Cas n° 2 :: L'extension du bloc polaire suivant la direction circonférentielle est trop grande pour permettre le mode de montage envisagé ci-dessus. Dans ce cas, qui est celui de l'inducteur donné plus particulièrement en exemple, les blocs polaires doivent être constitués avant le montage. Chacun d'eux est placé dans une position intermédiaire, au dessus de la culasse, parallélement à l'axe de l'inducteur, et le positionnement final s'obtient par translation de ce bloc parallèlement à cet axe d'inducteur jusqu'à sa position définitive d'assemblage.

Conformément à la figure 6, dans ces deux cas de montage, l'assemblage de chaque bloc polaire s'effectue à l'aide de vis 18 qui passent à travers les trous ménagés dans la culasse magnétique 16 et qui sont vissées à l'intérieur des trous taraudés 19 de la pièce polaire 12. Ces vis constituent des pièces de liaison ayant une tête de manoeuvre 18A au voisinage de la face externe de la culasse 16, un fût 18B traversant cette culasse et un pied 18C vissé dans une pièce polaire 12.

Les extrémités supérieures des pièces polaires sont taillées en queue d'aronde de façon à permettre l'insertion d'une clavette de fermeture d'encoche 20. Cette clavette peut être constituée d'un matériau isolant, ou d'un métal amagnétique recouvert d'un matériau d'isolation.

Dans la forme d'exécution de la présente invention qui a été décrite ci-dessus, le circuit magnétique est réalisé en deux parties et donc l'assemblage s'effectue en deux temps :
- premier temps : montage du bloc bobine sur sa pièce polaire,
- deuxièm temps : montage du bloc polaire sur la culasse magnétique.

Dans le cas d'un circuit magnétique en une seule partie, l'assemblage définitif s'obtiendrait par le montage du bloc bobine tel que décrit ci-dessus directement sur une pièce polaire intégrée à la culasse du circuit magnétique, cette pièce présentant les mêmes dispositions que la pièce polaire rapportée décrite à l'aide de la figure 4. Ce cas correspondrait au cas de montage n°1 précédemment indiqué.

Un inducteur réalisé suivant le procédé conforme à l'invention comporte en outre :
- un boîtier d'inducteur 34, 36 contenant au moins lesdits blocs polaires 12, 32,
- et un circuit de refroidissement 38 faisant circuler de l'eau dans ce boîtier au contact des parois desdits blocs bobines.

Il présente les deux avantages suivants:
1) L'utilisation du support de bobine - et dans une moindre mesure de la cale de fermeture d'encoche - crée une barrière électrique entre les conducteurs de la bobine et la masse métallique constituée par le circuit magnétique. Il en résulte que, lors du vieillissement naturel des matériaux d'isolation des conducteurs (création de micro-porosités), l'intensité des courants de fuite qui se développent dans l'eau de refroidissement entre les conducteurs sous tension et la masse métallique est limitée. Le processus de dégradation de l'inducteur est alors ralenti de manière importante et la durée de vie de l'inducteur est ainsi augmentée. Cette disposition ne permet pas par contre de prévenir tout incident lié à des conditions anormales d'exploitation telles que l'introduction de corps étrangers, ou une perte d'eau de refroidissement...
2) La conception démontable du bloc bobine préfabriqué et imprégné individuellement permet - après un accident éventuel affectant une ou plusieurs bobines - de procéder rapidement et facilement au remplacement de la ou des bobines accidentées,'sans avoir à intervenir sur les bobines quine présentent pas de défaut. L'utilisateur ayant à sa disposition un stock de tels blocs bobines préfabriqués et imprégnés, réalisés par le constructeur de l'inducteur, peut procéder lui-même à la réparation de ses inducteurs sans avoir recours ni à du personnel hautement spécialisé dans le bobinage électrique, ni à des équipements particuliers tels que des installations d'imprégnation.

Le procédé de réalisation selon la présente invention s'applique à tous les cas où l'inducteur est constitué d'un circuit magnétique comportant un certain nombre de pièces polaires et de bobines préfabriquées qui doivent être chacune montée coaxialement sur une pièce polaire.

Ce procédé de réalisation est donc valable pour la réalisation d'inducteur à champ tournant, à champ glissant, biphasé, triphasé, plans ou présentant une section circulaire, carrée ou rectangulaire...

## Revendications

1. Procédé de réalisation d'un inducteur électromagnétique statique à bobines immergeables, caractérisé par le fait que, après réalisation de la bobine d'excitation (1) qui doit être montée sur chacune des pièces polaires (12) de cet inducteur, cette bobine est fixée autour d'un support de bobine tubulaire (4, 6) isolant et rigide pour former un bloc de bobine annulaire qui est ensuite imprégné d'une résine durcissable puis, après durcissement de cette résine, enfilé et bloqué de manière réversible sur cette pièce polaire.

2. Procédé selon la revendication 1, l'inducteur à réaliser devant comporter les éléments suivants :
- une culasse de circuit magnétique (16) constituée d'un matériau ferromagnétique,
- des pièces polaires de circuit magnétique (12) constituées d'un matériau ferromagnétique, ces pièces se succédant en saillies sur une face polaire (16A) de ladite culasse, chacune de ces pièces s'étendant selon un axe de pôle (5) et présentant une surface périphérique (13A, 12B, 12C) entourant cet axe,
- des bobines d'excitation (1) constituées d'un conducteur isolé (2) enroulé autour d'un axe de bobine(3), ces bobines étant imprégnées d'une résine durcie et étant respectivement disposées coaxialement autour desdites pièces polaires pour constituer une succession de blocs polaires (32, 12) comportant chacun une dite pièce polaire et une dite bobine associées,
- et des moyens d'alimentation électrique pour fournir aux dites bobines des courants électriques d'excitation,
- ce procédé comportant des opérations de réalisation dudit circuit magnétique, de réalisation desdits blocs polaires, et de réalisation desdits moyens d'alimentation électrique,
- chaque dite opération de réalisation d'un bloc polaire comportant les opérations suivantes :
- réalisation d'une bobine (1) constituée d'un conducteur isolé (2) enroulé autour d'un dit axe de bobine (3),
- mise en place de ladite bobine autour de ladite pièce polaire (12) qui lui est associée,
- blocage de ladite bobine à l'aide de cales et de frettes,
- et imprégnation d'un ensemble bobine comportant lesdites bobine, cales et frettes, cette imprégnation étant réalisée à l'aide d'une résine durcissable et étant complétée par un durcissement de cette résine,
- ledit procédé étant caractérisé par le fait qu'il comporte en outre les opérations suivantes :
- réalisation d'un support de bobine (4, 6) isolant et rigide, ce support comportant au moins un fût de bobine de forme tubulaire (4) autour d'un évidement central (4C),
- et mise en place de ladite bobine sur ce support de bobine autour de ce fût de bobine,
- ladite opération de blocage de bobine comportant un blocage de ladite bobine sur ledit support de bobine à l'aide de cales (8, 9, 10) et de frettes (11),
- ladite opération d'imprégnation étant une imprégnation d'un ensemble bobine constitué par lesdits support de bobine, bobine, cales et frettes, cette imprégnation étant réalisée en conservant ledit évidement central pour constituer un bloc bobine (32) de forme générale annulaire,
- ladite opération de mise en place de bobine étant une mise en place dudit bloc bobine autour de ladite pièce polaire (12) qui lui est associée,
- ladite opération de blocage de bobine comportant encore un blocage dudit bloc bobine sur ladite pièce polaire associée à l'aide de cales de bloc bobine (15), ces cales étant interposées de manière amovible entre ledit fût de bobine (4) et ladite surface périphérique (13A) de cette pièce polaire.

3. Procédé selon la revendication 2, caractérisé par le fait que ledit support de bobine (4, 6) comporte en outre une embase annulaire (6) qui se raccorde audit fût tubulaire (4) à partir d'un bord de base (4A) de celui-ci et qui s'étend à partir de ce bord vers l'extérieur selon des directions sensiblement radiales par rapport audit fût de bobine,
- ladite bobine (1) étant disposée sur cette embase annulaire lors de sa dite mise en place sur ce support de bobine,
- cette embase annulaire étant interposée entre cette bobine et ladite surface polaire (16A) de ladite culasse de circuit magnétique dans l'inducteur réalisé.

4. Procédé selon la revendication 2, dans lequel lesdites cales amovibles (15) sont des cales dont une expansion radiale est commandée par une compression axiale, les directions radiale et axiale étant rapportées audit axe de pôle (5).

5. Procédé selon la revendication 2 dans lequel ladite opération de réalisation d'une bobine (1) comporte elle même les opérations suivantes:
- réalisation de plusieurs galettes, chaque galette (40) étant réalisée par enroulement d'un conducteur isolé (2) autour d'un axe de galette (3) en spires successives dans un plan perpendiculaire à cet axe de galette de manière que cette galette conserve ensuite sensiblement sa forme,
- empilement desdites galettes selon un axe de bobine (3), lesdits axes de galette étant amenés en coïncidence avec cet axe de bobine, des intervalles axiaux étant maintenus entre les galettes successives par des cales (42) pour le passage d'un fluide de refroidissement,
- et solidarisation de ces galettes et de ces cales.

6. Procédé selon la revendication 2, dans lequel lesdites pièces polaires (12) sont distinctes de ladite culasse de circuit magnétique (16) et assemblées à cette culasse, ladite opération de mise en place dudit bloc bobine (32) autour de ladite pièce polaire étant effectuée à distance de cette culasse et formant un bloc polaire (12, 32), ce procédé comportant une opération de montage de ce bloc polaire pour fixer ce bloc à cette culasse.

7. Procédé selon la revendication 6, caractérisé par le fait qu'une dite opération de montage d'un dit bloc polaire (32) sur ladite culasse de circuit magnétique (16) comporte les opérations suivantes lorsque cette culasse constitue une couronne magnétique devant porter lesdits blocs polaires à partir de sa surface interne :
- orientation dudit bloc polaire pour l'orienter comme il devra l'être ultérieurement lorsqu'il sera dans une position d'assemblage qu'il devra prendre dans cette couronne magnétique pour être assemblé à cette couronne,
- positionnement intermédiaire dudit bloc polaire dans une position intermédiaire qui est décalée parallèlement à ladite surface polaire (16A) de la culasse par rapport à ladite position d'assemblage,
- positionnement final dudit bloc polaire par translation de ce bloc jusqu'à ladite position d'assemblage,
- et assemblage dudit bloc polaire à ladite couronne magnétique.

8. Procédé selon la revendication 7, caractérisé par le fait que ladite opération d'assemblage dudit bloc polaire (12, 33) à ladite couronne magnétique (16) est réalisée à l'aide de pièces de liaison (18) qui ont une tête de manoeuvre (18A) au voisinage d'une surface accessible de cette couronne, un fût (18B) traversant cette couronne, et un pied (18C) pénétrant dans ladite pièce polaire de ce bloc pour s'y accrocher.

9. Inducteur électromagnétique statique à bobines immergées dans l'eau, notamment pour constituer un brasseur électromagnétique pour des produits métallurgiques en cours de solidification, cet inducteur comportant les éléments suivants :
- une culasse de circuit magnétique (16) constituée d'un matériau ferromagnétique,
- des pièces polaires de circuit magnétique (12) constituées d'un matériau ferromagnétique, ces pièces se succédant en saillies sur une face polaire (16A) de ladite culasse, chacune de ces pièces s'étendant selon un axe de pôle (5) et présentant une surface périphérique (13A, 12B, 12C) entourant cet axe,
- des bobines (1) constituées d'un conducteur isolé (2) enroulé autour d'un axe de bobine(3), ces bobines étant imprégnées d'une résine durcie et étant respectivement disposées coaxialement autour desdites pièces polaires pour constituer une succession de blocs polaires (32, 12) comportant chacun une dite pièce polaire et une dite bobine associées,
- et des moyens d'alimentation électrique pour fournir aux dites bobines des courants électriques d'excitation,
- ledit inducteur étant caractérisé par le fait que ladite bobine (1) est intégrée dans un bloc bobine (32) imprégné par ladite résine et comportant en outre un support de bobine (4, 6), ce support étant constitué d'un matériau isolant qui lui confère une rigidité, ce support formant au moins un fût de bobine (4) de forme tubulaire autour d'un évidement central (4C), ce fût entourant ladite pièce polaire (12) associée à cette bobine, cette bobine entourant ce fût,
- des cales de bloc bobine (15) étant interposées entre ce fût et cette pièce polaire pour réaliser un blocage mutuel, ces cales étant amovibles.

10. Inducteur selon la revendication 9, caractérisé par le fait que ledit support de bobine (4, 6) comporte en outre une embase annulaire (6) qui se raccorde audit fût tubulaire (4) à partir d'un bord de base (4C) de celui-ci et qui s'étend à partir de ce bord vers l'extérieur selon des directions sensiblement radiales par rapport audit fût de bobine, cette embase annulaire étant interposée entre cette bobine et ladite surface polaire (16A) de ladite culasse de circuit magnétique (16).

11. Inducteur selon la revendication 9, comportant en outre :
- un boîtier d'inducteur (34, 36) contenant au moins lesdits blocs polaires (12, 32),
- et un circuit de refroidissement (38) faisant circuler de l'eau dans ce boîtier au contact des parois desdits blocs bobines.

## Patentansprüche

1. Verfahren zur Herstellung eine statischen elektromagnetischen Induktors mit eintauchbaren Spulen, dadurch gekennzeichnet, daß nach der Herstellung der Erregungsspule (1), die auf jedem der Polstücke (12) des Induktors montiert werden soll, diese Spule auf einem rohrförmigen, isolierenden und starren Spulenträger (4, 6) befestigt wird und mit diesem einen ringförmigen Spulenblock bildet, der dann mit einem härtbaren Harz imprägniert wird und nach der Aushärtung des Harzes lösbar auf das Polstück aufgesetzt und dort blockiert wird.

2. Verfahren nach Anspruch 1, bei dem der herzustellende Induktor die folgenden Elemente aufweisen soll:
- ein Magnetkreisjoch (16), bestehend aus ferromagnetischem Material,
- Magnetkreis-Polstücke (12), bestehend aus ferromagnetischem Material, wobei diese Polstücke über eine Polseite (16A) des Jochs vorspringend aufeinanderfolgen und jedes der Polstücke sich entlang einer Polachse (5) erstreckt und eine diese Achse umgebende periphere Oberfläche (13A, 12B, 12C) besitzt,
- Erregungsspulen (1), bestehend aus einem isolierten Leiter (2), der um eine Spulenachse (3) herumgewickelt ist, wobei diese Spulen mit einem gehärteten Harz imprägniert sind und koaxial um die Polstücke herum angeordnet sind, um eine Folge von Polblöcken (32, 12) zu bilden, die je ein Polstück und eine zugeordnete Spule enthalten,
- und Mittel zur elektrischen Speisung, die den Spulen elektrische Erregungsströme liefern,
wobei dieses Verfahren Verfahrensschritte zur Herstellung des Magnetkreises, der Polblöcke und der elektrischen Speisemittel enthält,
- wobei jeder Verfahrensschritt der Herstellung eines Polblocks die folgenden Operationen enthält:
- Herstellung einer Spule (1) aus einem isolierten Leiter (2), der um eine Spulenachse (3) gewickelt ist,
- Anordnung der Spule um das zugehörige Polstück (12) herum,
- Blockierung der Spule mit Hilfe von Spannklötzen und Spannbändern,
- und Imprägnierung einer Spuleneinheit, die die Spule, die Klötze und Bänder enthält, wobei zur Imprägnierung ein härtbares Harz verwendet wird, das dann ausgehärtet wird,
- wobei das Verfahren dadurch gekennzeichnet ist, daß es außerdem die folgenden Operationen enthält:
- Herstellung eines isolierenden und starren Spulenträgers (4, 6), der mindestens einen rohrförmigen Spulenkörper (4) um eine zentrale Öffnung herum (4C) aufweist,
- Anordnung der Spule auf diesem Spulenträger um den Spulenkörper herum,
- wobei die Operation der Blockierung der Spule eine Blokkierung der Spule in dem Spulenträger mit Hilfe von Spannklötzen (8, 9, 10) und Spannbändern (11) enthält,
- wobei die Imprägnierung eine Imprägnierung einer Spuleneinheit ist, die aus dem Spulenträger, der Spule, den Klötzen und Bändern besteht, und die Imprägnierung die zentrale Öffnung freiläßt, um einen im allgemeinen ringförmigen Spulenblock (32) zu bilden,
- wobei die Operation des Anbringens der Spule das Anbringen der Spule um das ihm zugeordnete Polstück (12) bedeutet,
- wobei die Operation der Blockierung der Spule weiter eine Blockierung des Spulenblocks auf dem zugeordneten Polstück mit Hilfe von Spulenblock-Klötzen (15) aufweist, die lösbar zwischen dem Spulenkörper (4) und der peripheren Oberfläche (13A) dieses Polstücks eingefügt werden.

3. Verfahren nach Anspruch 2, dadurch gekennzeichnet, daß der Spulenträger (4, 6) außerdem einen ringförmigen Ansatz (6) aufweist, der an den rohrförmigen Körper (4) ausgehend von einem Basisrand (4A) dieses Körpers anschließt und von diesem Rand nach außen gemäß im wesentlichen radialen Richtungen bezüglich des Spulenkörpers verläuft,
- wobei die Spule (1) auf diesem ringförmigen Ansatz beim Anbringen auf dem Spulenträger angeordnet ist,
- wobei der ringförmige Ansatz zwischen die Spule und die Polfläche (16a) des Magnetkreisjochs im fertigen Induktor eingefügt wird.

4. Verfahren nach Anspruch 2, bei dem die lösbaren Klötze (15) Klötze sind, deren radiale Ausdehnung durch eine axiale Kompression gesteuert wird, wobei die radiale und axiale Richtung auf die Polachse (5) bezogen sind.

5. Verfahren nach Anspruch 2, bei dem die Operation der Herstellung einer Spule (1) ihrerseits die folgenden Verfahrensschritte aufweist:
- Herstellung mehrerer Flachspulen (40), die je durch Wikkeln eines isolierten Leiters (2) um eine Flachspulenachse (3) in aufeinanderfolgenden Windungen in einer Ebene senkrecht zur Achse der Flachspule hergestellt werden, so daß diese Flachspule dann ihre Form im wesentlichen beibehält,
- Stapelung der Flachspulen entlang einer Spulenachse (3), wobei die Achsen der Flachspulen in Koinzidenz mit der Spulenachse gebracht werden und axiale Abstände zwischen den aufeinanderfolgenden Flachspulen durch Abstandsstücke (42) für den Durchlaß eines Kühlmittels verbleiben,
- und Fixierung dieser Flachspulen und Abstandsstücke.

6. Verfahren nach Anspruch 2, bei dem die Polstücke (12) von dem Magnetkreisjoch (16) getrennte Elemente sind und am Joch montiert werden, wobei die Operation des Anbringens des Spulenblocks (32) um das Polstück herum entfernt von diesem Joch erfolgt und zu einem Polblock (12, 32) führt, worauf dieser Polblock auf dem Joch befestigt wird.

7. Verfahren nach Anspruch 6, dadurch gekennzeichnet, daß eine Operation der Montage eines Polblocks (33) auf dem Magnetkreisjoch (16) die folgenden Operationen enthält, wenn das Joch aus einem Magnetkranz besteht, der die Polblöcke auf seiner Innenseite tragen soll:
- Ausrichtung des Polblocks, so wie er später ausgerichtet sein soll, wenn er in einer endgültigen Stellung ist, die er im Magnetkranz einnehmen soll,
- vorübergehende Positionierung des Polblocks in einer Zwischenposition, die parallel zur Polfläche (16A) des Jochs bezüglich der Montagelage versetzt ist,
- endgültige Positionierung des Polblocks durch translatorische Verschiebung des Blocks bis in seine endgültige Montageposition,
- und Fixierung des Polblocks auf dem Magnetkranz.

8. Verfahren nach Anspruch 7, dadurch gekennzeichnet, daß die Operation der Montage des Polblocks (12, 33) auf dem Magnetkranz (16) mit Hilfe von Verbindungsstücken (18) erfolgt, die einen Betätigungskopf (18A) in der Nähe einer zugänglichen Seite dieses Kranzes, einen Schaft (18B), der durch den Kranz hindurch verläuft, und einen Fuß (18C) aufweist, der in das Polstück des Blocks eindringt und dort verankert wird.

9. Elektromagnetischer, statischer Induktor mit in Wasser eingetauchten Spulen, insbesondere für die Bildung eines elektromagnetischen Rührorgans für Eisenhüttenprodukte während der Verfestigung, wobei dieser Induktor die folgenden Elemente enthält:
- ein Magnetkreisjoch (16) bestehend aus einem ferromagnetischen Material,
- Polstücke des Magnetkreises (12), bestehend aus ferromagnetischem Material, wobei diese Polstücke an einer Polseite (16A) des Jochs vorspringend aufeinander folgen und jedes der Polstücke sich entlang einer Polachse (5) erstreckt und eine periphere, diese Achse umgebende Oberfläche (13A, 12B, 12C) aufweist,
- Spulen (1), die von einem um eine Spulenachse (3) gewikkelten isolierten Leiter (2) gebildet werden und mit einem gehärteten Harz imprägniert sind, wobei diese Spulen koaxial um die Polstücke herum angeordnet sind, um eine Folge von Polblöcken (32, 12) zu bilden, die je ein Polstück und eine zugeordnete Spule besitzen,
- und Mittel zur elektrischen Speisung, die die Spulen mit elektrischem Erregungsstrom versorgen,
- wobei der Induktor dadurch gekennzeichnet ist, daß die Spule (1) in einen Spulenblock (32) integriert ist, der mit dem Harz imprägniert ist und außerdem einen Spulenträger (4, 6) besitzt, wobei dieser Träger aus einem Isoliermaterial besteht, das ihm eine Steifigkeit verleiht, und mindestens einen rohrförmig um eine zentrale Öffnung (4C) verlaufenden Spulenkörper (4) besitzt, wobei der Körper das dieser Spule zugeordnete Polstück (12) umgibt und die Spule den Körper umgibt,
- wobei Spulenblock-Klötze (15) zwischen den Spulenkörper und das Polstück eingefügt sind, um eine gegenseitige Blokkierung zu erzielen, wobei diese Klötze lösbar sind.

10. Induktor nach Anspruch 9, dadurch gekennzeichnet, daß der Spulenträger (4, 6) außerdem einen ringförmigen Ansatz (6) aufweist, der sich an den Spulenkörper (4) ausgehend von einem Basisrand (4C) dieses Körpers anschließt und ausgehend von diesem Rand nach außen gemäß im wesentlichen radialen Richtungen bezüglich des Spulenkörpers verläuft, wobei der ringförmige Ansatz zwischen die Spule und die Polfläche (16A) des Jochs (16) des Magnetkreises eingefügt ist.

11. Induktor nach Anspruch 9, der außerdem aufweist:
- ein Induktorgehäuse (34, 36), das mindestens die Polblöcke (12, 32) enthält,
- und einen Kühlkreis (38), der Wasser durch das Gehäuse in Kontakt mit den Wänden der Spulenblöcke zirkulieren läßt.

## Claims

1. A method of making a static electromagnetic inductor having immersable windings, said method being characterized in that, after making the excitation winding (1) which is to be mounted on each of the pole pieces (12) of the inductor, the winding is fixed around a rigid insulating tubular winding support (4, 6) so as to form an annular winding block which is then impregnated with a settable resin and, after the resin has set, is fitted on the pole piece and locked thereto in reversible manner.

2. A method according to claim 1, in which the inductor to be made is to include the following components:
a magnetic circuit yoke (16) made of a ferromagnetic material;
magnetic circuit pole pieces (12) made of a ferromagnetic material, which pieces project successively from a pole face (16A) of said yoke, each of the pieces extending along a pole axis (5) and presenting a peripheral surface (13A, 12B, 12C) surrounding said axis;
excitation windings (1) each made of an insulated conductor (2) wound about a winding axis (3), the windings having been impregnated with a resin that has set and being respectively disposed coaxially around said pole pieces so as to constitute a sequence of pole blocks (32, 12) each including an association of one of said pole pieces and one of said windings; and
electric power supply means to supply said windings with excitation electrical currents;
said method including steps of making said magnetic circuit, making said pole blocks, and making said electric power supply means;
each step of making a pole block including the following steps:
making a winding (1) made of an insulated conductor (2) wound about a winding axis (3);
installing said winding around said pole piece (12) which is associated therewith;
locking said winding by means of shims and bindings; and
impregnating a winding assembly including said winding, said shims, and said bindings, impregnation being carried out by using a settable resin and being completed by setting the resin;
said method being characterized in that it further includes the following steps:
making a rigid insulating winding support (4, 6) which includes at least one tubular winding former (4) around a central hole (4C); and
installing said winding on said winding support around the winding former;
said step of locking the winding comprising locking said winding on said winding support by means of shims (8, 9, 10) and bindings (11);
said impregnation step comprising impregnating a winding assembly made up of said winding support, said winding, said shims and said bindings, impregnation being performed such that said central hole is retained so as to form a winding block (32) which is annular in overall shape;
said step of installing the winding comprising installing said winding block around said pole piece (12) that is associated therewith; and
said step of locking the winding comprising further locking of said winding block onto its associated pole piece by means of winding block keys (15) which are interposed in removable manner between said winding former (4) and said peripheral surface (13A) of the pole piece.

3. A method according to claim 2, characterized by the fact that said winding support (4, 6) further includes an annular flange (6) which is connected to said tubular former (4) via a bottom edge (4A) thereof, and which extends outwards from this edge in directions that are substantially radial relative to said winding former;
said winding (1) being disposed on this annular flange during said installation on the winding support; and
the annular flange being interposed between the winding and said pole surface (16A) of said magnetic circuit yoke in the finished inductor.

4. A method according to claim 2, in which said removable keys (15) are keys to which axial compression is applied to control radial expansion thereof, the radial and axial directions being relative to said pole axis (5).

5. A method according to claim 2, in which said step of making a winding (1) itself comprises the following steps:
making a plurality of pancake coils, each pancake (40) being made by winding an insulated conductor around a pancake axis (3) in successive turns in a plane perpendicular to the pancake axis so that the pancake substantially retains its shape;
stacking said pancakes about a winding axis (3), said pancake axes being made to coincide with the winding axis, with axial gaps being kept between successive pancakes by means of shims (42) so that a cooling fluid can flow through the gaps; and
fixing together the pancakes and the shims.

6. A method according to claim 2, in which said pole pieces (12) are distinct from said magnetic circuit yoke (16) and mounted on the yoke, said step of installing said winding block (32) around said pole piece being performed at a distance from the yoke and forming a pole block (12, 32), the method including a step of installing the pole block so as to fix the block to the yoke.

7. A method according to claim 6, characterized by the fact that said step of installing said pole block (32) on said magnetic circuit yoke (16) comprises the following steps when the yoke constitutes a magnetic ring which is to carry said pole blocks via its inside surface:
giving said pole block the angular position it subsequently needs when in the assembly position which it is to take up in the magnetic ring so as to be mounted thereon;
intermediate positioning of said pole block in an intermediate position which is offset parallel to said pole surface (16A) of the yoke relative to said assembly position;
final positioning of said pole block by moving the block in translation until it reaches said assembly position; and
assembling said pole block on said magnetic ring.

8. A method according to claim 7, characterized by the fact that said step of installing said pole block (12, 33) on said magnetic ring (16) is performed by means of fasteners (18) each of which has a drive head (18A) adjacent to an accessible surface of the yoke, a shaft (18B) passing through the ring, and a tip (18C) penetrating into said pole piece so as to fasten itself thereto.

9. A static electromagnetic inductor having windings immersed in water, in particular for constituting an electromagnetic stirrer for metal castings undergoing solidification, said inductor including the following components:
a magnetic circuit yoke (16) made of a ferromagnetic material;
magnetic circuit pole pieces (12) made of a ferromagnetic material, which pieces project successively from a pole face (16A) of said yoke, each of the pieces extending along a pole axis (5) and presenting a peripheral surface (13A, 12B, 12C) surrounding said axis;
windings (1) each made of an insulated conductor (2) wound about a winding axis (3), the windings having been impregnated with a resin that has set and being respectively disposed coaxially around said pole pieces so as to constitute a sequence of pole blocks (32, 12) each including an association of one of said pole pieces and one of said windings; and
electric power supply means to supply said windings with excitation electrical currents;
said inductor being characterized by the fact that said winding (1) is integrated into a winding block (32) impregnated with said resin and further including a winding support (4,6) which is made of an insulating material making it rigid, the support constituting at least one tubular winding former (4) around a central hole (4C), the former surrounding said pole piece (12) associated with the winding, and the winding surrounding the former; and
winding block keys (15) being interposed between the former and the pole piece so as to lock them together, which keys are removable.

10. An inductor according to claim 9, characterized by the fact that said winding support (4, 6) further includes an annular flange (6) which is connected to said tubular former (4) via a bottom edge (4A) thereof, and which extends outwards from this edge in directions that are substantially radial relative to said winding former, the annular flange being interposed between the winding and said pole surface (16A) of said magnetic circuit yoke (16).

11. An inductor according to claim 9, further including:
an inductor housing (34, 36) containing at least said pole blocks (12, 32); and
a cooling circuit (38) causing water to flow through the housing in contact with the walls of said winding blocks.
